**Europäisches Patentamt**

**European Patent Office**

**Office européen des brevets**

(19)

(11) Veröffentlichungsnummer: **0 126 730**
**B1**

(12) **EUROPÄISCHE PATENTSCHRIFT**

(45) Veröffentlichungstag der Patentschrift:
**22.06.88**

(21) Anmeldenummer: **83902239.9**

(22) Anmeldetag: **27.07.83**

(86) Internationale Anmeldenummer:
**PCT/CH 83/00092**

(87) Internationale Veröffentlichungsnummer:
**WO 84/00514 (16.02.84 Gazette 84/5)**

(51) Int. Cl.⁴: **B 28 B 7/18,** B 28 B 7/16,
B 28 B 7/08, B 28 B 1/10,
B 28 B 13/02, A 01 G 9/00,
E 02 D 29/02

(54) **VERFAHREN ZUM PRESSEN UND VIBRIEREN VON POLYEDERKÖRPERN.**

(30) Priorität: **28.07.82 CH 4568/82**

(43) Veröffentlichungstag der Anmeldung:
**05.12.84 Patentblatt 84/49**

(45) Bekanntmachung des Hinweises auf die Patenterteilung:
**22.06.88 Patentblatt 88/25**

(84) Benannte Vertragsstaaten:
**AT BE CH DE FR GB LI LU NL SE**

(56) Entgegenhaltungen:
**DE - A - 2 822 564**
**FR - A - 822 655**
**FR - A - 1 006 095**
**FR - A - 1 481 835**
**NL - A - 6 716 140**

**R. Wendehorst, "Baustoffkunde" 18. Auflage, Hannover 1966, S. 293**

(73) Patentinhaber: **DOLDER, Hans, Gheidstrasse 23, 5507 Mellingen (CH)**

(72) Erfinder: **DOLDER, Hans, Gheidstrasse 23, 5507 Mellingen (CH)**

(74) Vertreter: **Blum, Rudolf Emil Ernst et al, c/o E. Blum & Co Patentanwälte Vorderberg 11, CH-8044 Zürich (CH)**

## Beschreibung

Die vorliegende Erfindung betrifft ein Verfahren zur Herstellung von vieleckigen Formkörpern aus einem Gemisch aus feinkörnigem Brechkies und Zement, das mittels Pressen und Vibrieren erdfeucht verdichtet wird, welche Formkörper einen zylinderförmigen Innenraum und Verankerungsaussparungen in den Eckpartien ihrer Wände aufweisen.

Zementgebundene Formkörper sind bekannt. An solche Formkörper wird allgemein die Forderung gestellt, dass sie möglichst leicht und fest sind und insbesondere eine gute Frostbeständigkeit aufweisen. Werden solche Formkörper als Pflanzschalen für begrünte Mauern verwendet, sollten sie überdies eine natürliche, rauhe Aussenform aufweisen.

Solche Formkörper werden üblicherweise durch ein Verfahren mit Pressvibrieren hergestellt, und zu diesem Zwecke sind eine Vielfalt von Verfahren und Vorrichtungen bekannt geworden.

Erfindungsgemäss ist erkannt worden, dass die obigen Ziele erreicht werden, wenn im Zuschlagstoff Brechkies verwendet wird. Bei zementgebundenen Werkstoffen ist bis jetzt als Zuschlagstoff im wesentlichen Flusskies verwendet worden. Die charakteristische Aussenform von Flusskies ist eine rundliche Struktur, diejenige von Brechkies eine kantige, eckige Struktur. Die Folge davon ist, dass die einzelnen, gerundeten Flusskiesstücke während eines Pressvibrierens ohne weiteres aneinander abgleiten und abrollen können. Hingegen verhalten sich Brechkiesstücke wegen der eckigen Aussenform wie Eisenbahnschotter, d.h., die einzelnen Kiesstücke können sich unter Belastung kaum mehr aneinander vorbeibewegen.

Formsteine zum Erstellen eines bepflanzbaren Sichtmauerwerks sind aus der DE-A 2 822 564 bekannt. Weiter ist aus der FR-A 1 481 835 bekannt, Formkörper dadurch herzustellen, dass das Mischgut aus einem Silo in einen Schieber gefüllt wird und dieser in einen Formhohlraum geschoben wird. Dabei fällt das Mischgut zufallsverteilt in den Schieber und erreicht im zufallsverteilten Zustand den Formhohlraum. Die endgültige gepresste Form wird während der Durchführung des Pressvibrierens erreicht, während welchem die rundlichen Flusskiesstücke ohne weiteres aneinander vorbeigleiten können.

Es ist jedoch in keiner Weise möglich, mittels der Pressvibrieranlage nach der FR-A 1 481 835 Gemische zu verarbeiten, deren Zuschlagstoffe eckigen, kantigen Brechkies enthalten, weil Brechkieskörner nicht aneinander vorbeigleiten.

Es ist daher ein Ziel der Erfindung, ein Verfahren zu zeigen, mittels welchem Zuschlagstoffe aus Brechkies in einem hydraulischen Gemisch mittels eines Pressvibrierens verarbeitet werden können.

Die Erfindung, wie sie in den Patentansprüchen gekennzeichnet ist, löst die Aufgabe, ein Formstück aus Zement und Brechkies mittels einem Pressvibrieren herzustellen, indem das Mischgut in einem Schieber mit einem Reduktionseinsatz eingegeben wird, der das Mischgut entsprechend der nachgeschalteten Form verteilt, und darauf das Mischgut durch ein schlagartiges Zurückschnellen des Schieberbodens als geschlossene, vorgeformte Masse in die Form eingebracht wird.

Die mit der Erfindung erreichten Vorteile sind vor allem darin zu sehen, dass das Mischgut in einen vorgeformten Zustand in die Form eingebracht wird und somit Brechkies als Zuschlagstoff eingesetzt werden kann. Damit lassen sich leichtere Formsteine herstellen, die sehr frostbeständig sind und einem Sichtmauerwerk ein mehr natürliches Aussehen geben.

Nachfolgend wird der Erfindungsgegenstand anhand eines Ausführungsweges und den beigelegten Zeichnungen näher erläutert. Es zeigt:

Fig. 1 einen Längsschnitt durch eine Anlage zur Durchführung des Verfahrens, mit förderbereitem Formkörper,

Fig. 2 die Anlage nach Fig. 1, wobei der Formkörper im Lagergestell abgesenkt wird,

Fig. 3 die Anlage nach Fig. 1, wobei die zweite Absenkungsphase für das Absetzen des Formkörpers vom Stabilisator dargestellt ist,

Fig. 4 einen Schnitt durch die Vibrierpresse in der Beschickungsphase,

Fig. 4b den rückwärtigen Teil der Vibrierpresse nach Fig. 4, wobei die Press- und Vibriervorrichtung und die Formkörperform einschliesslich Kern weggelassen sind,

Fig. 5 die Vibrierpresse in der Verdichtungsphase mit abgesenkter Press- und Vibriervorrichtung,

Fig. 5b die Vibrierpresse nach Fig. 5, entsprechend der Darstellung nach Fig. 4 b,

Fig. 6 die Vibrierpresse mit abgehobener Pressvibriervorrichtung, vorbereitet zum Schwenken der Formkörperform,

Fig. 6b die Vibrierpresse nach Fig. 6, entsprechend der Darstellung nach Fig. 4 b,

Fig. 7 eine Zwischenstellung der Formkörperform während des Schwenkens,

Fig. 8 die Formkörperform nach erfolgter Schwenkung um 180°,

Fig. 9–13 die einzelnen Bewegungsphasen der Pressvibriervorrichtung und der Formkörperform während dem Entformen,

Fig. 14 einen Schnitt durch die Vibrierpresse in ihrer Ausgangsstellung,

Fig. 15 eine Vorderansicht der Vibrierpresse,

Fig. 16 eine Vorderansicht nach Fig. 15, mit hochgehobener Formkörperform und mit der Förderanlage im Schnitt gezeichnet,

Fig. 17 eine Ansicht des Lagergestells,

Fig. 18 das Lagergestell mit Formkörper,

Fig. 19 einen Schnitt durch die Beschickungsanlage in der Ausgangsstellung,

Fig. 19b die Beschickungsanlage nach Fig. 19 mit vorgeschobenem Schubfach,

Fig. 20 einen Schnitt durch die Förderanlage,

Fig. 20b die Förderanlage nach Fig. 20 mit angehobenem Ausleger,

Fig. 21 einen Längsschnitt durch das Lagergestell,

Fig. 22 einen Längsschnitt der Förderanlage mit dem Lagergestell,

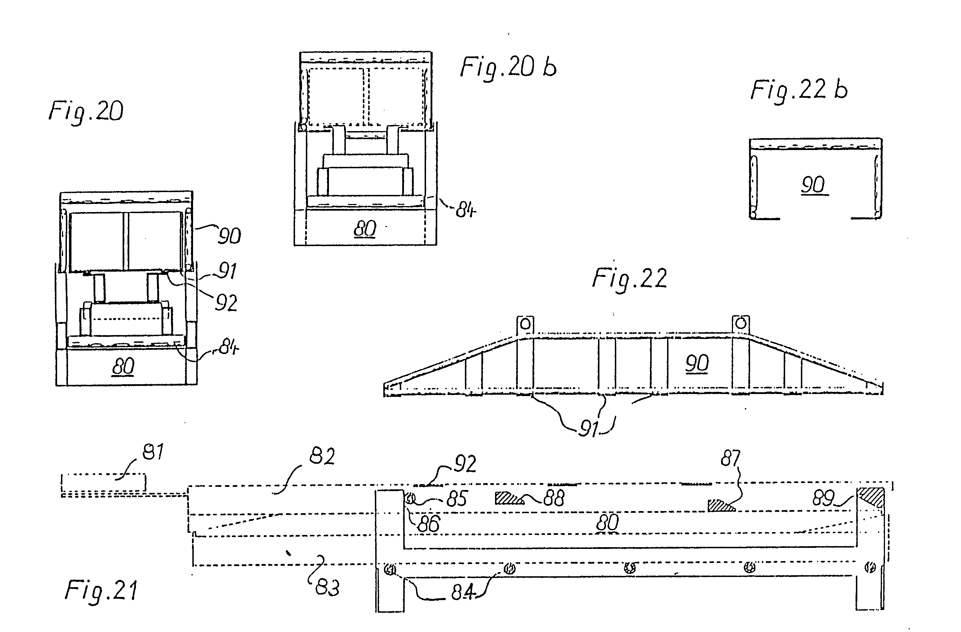

Fig. 22 b einen Querschnitt der Förderanlage nach Fig. 22,

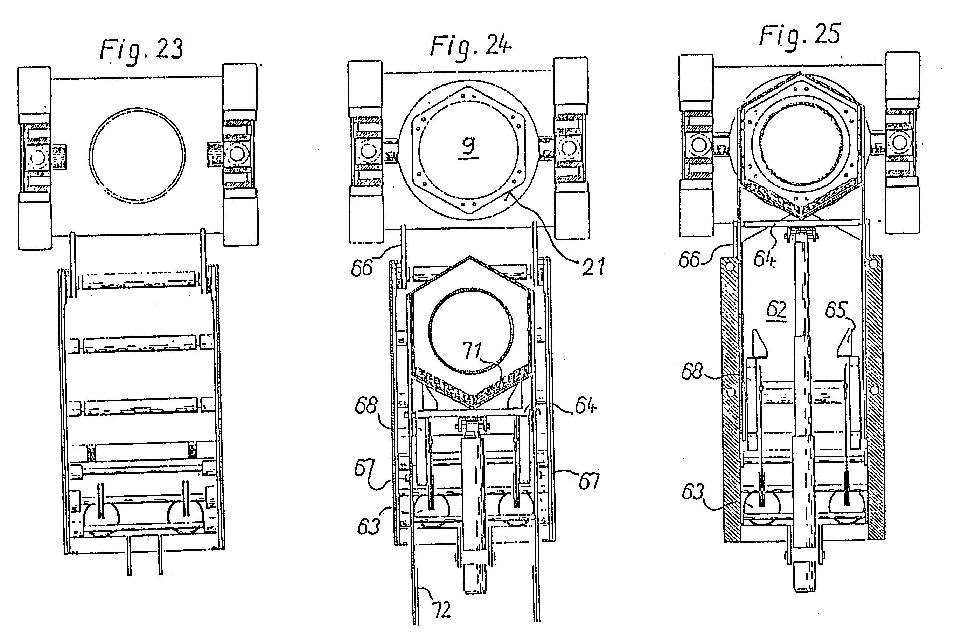

Fig. 23–29 jeweils einen Schnitt durch die Beschickungsanlage, von oben gesehen, wobei die einzelnen Phasen der Beschickung dargestellt sind,

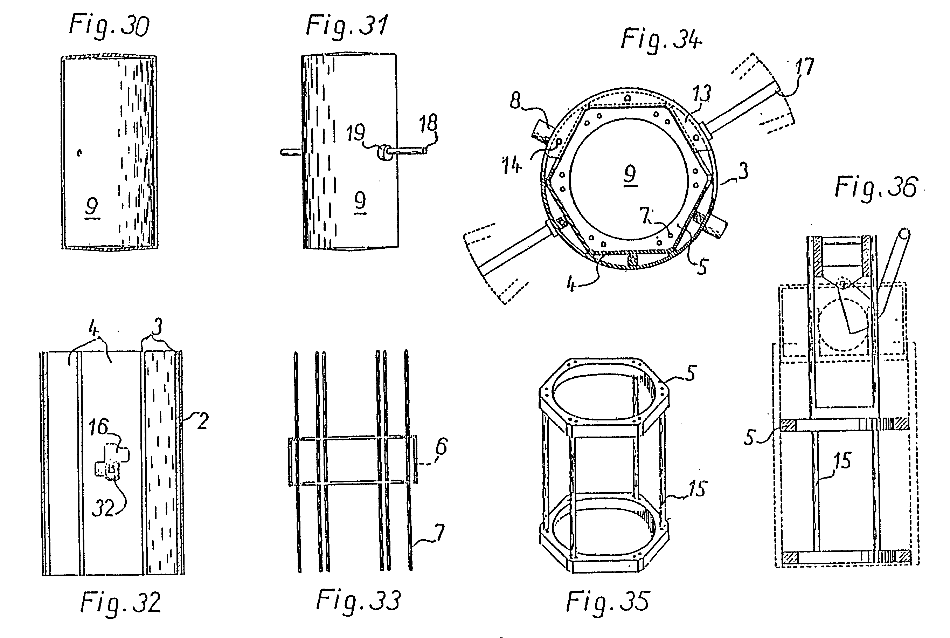

Fig. 30 eine Ansicht des Kerns,

Fig. 31 den Kern mit der Exzenterwelle und dem Exzenter,

Fig. 32 den Formmantel mit der Fixieröffnung,

Fig. 33 die Aussparungseisen und den Anschlagring,

Fig. 34 einen Schnitt durch den Kern, wobei die Bewegungen zum Entformen gezeigt sind,

Fig. 35 das Kronenringpaar mit den Kronenringstützen,

Fig. 36 einen Schnitt durch einen oberen Teil der Vibrierpresse,

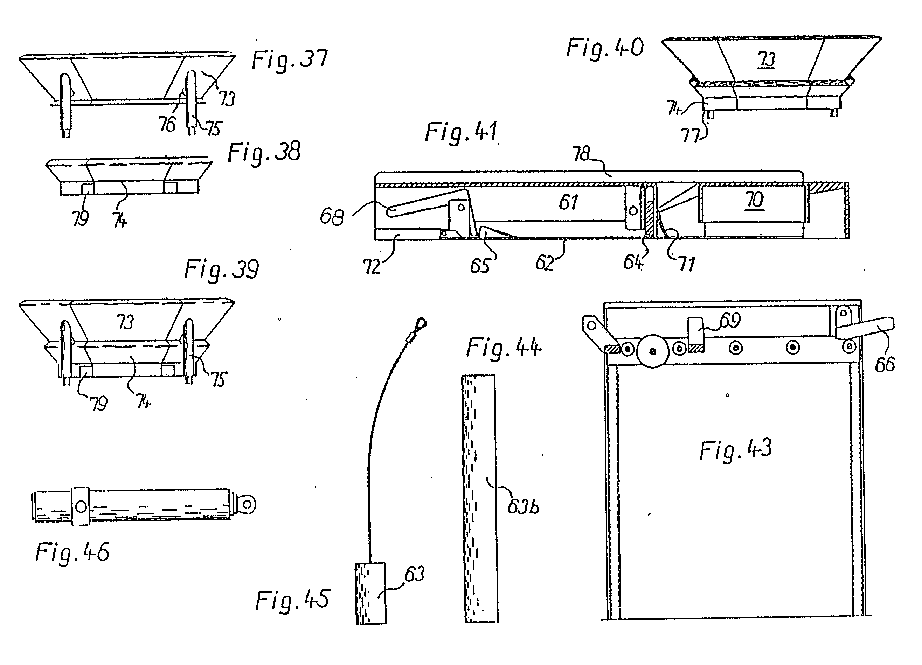

Fig. 37 eine Ansicht des Silos,

Fig. 38 eine Ansicht des Silountersatzes mit Wangenreiniger,

Fig. 39 das Silo mit dem Silountersatz,

Fig. 40 das Silo mit dem Schubfachreiniger,

Fig. 41 einen Schnitt durch das Schubfach,

Fig. 42 ein Anwendungsbeispiel der Formkörper,

Fig. 43 einen Schnitt durch die Beschickungsanlage, wobei der Ausklinker und die Blockierstütze gezeigt sind,

Fig. 44 ein Dämmrohr für ein Zuggewicht der Beschickungsanlage,

Fig. 45 das Zuggewicht,

Fig. 46 den Vorschubzylinder des Schubfaches,

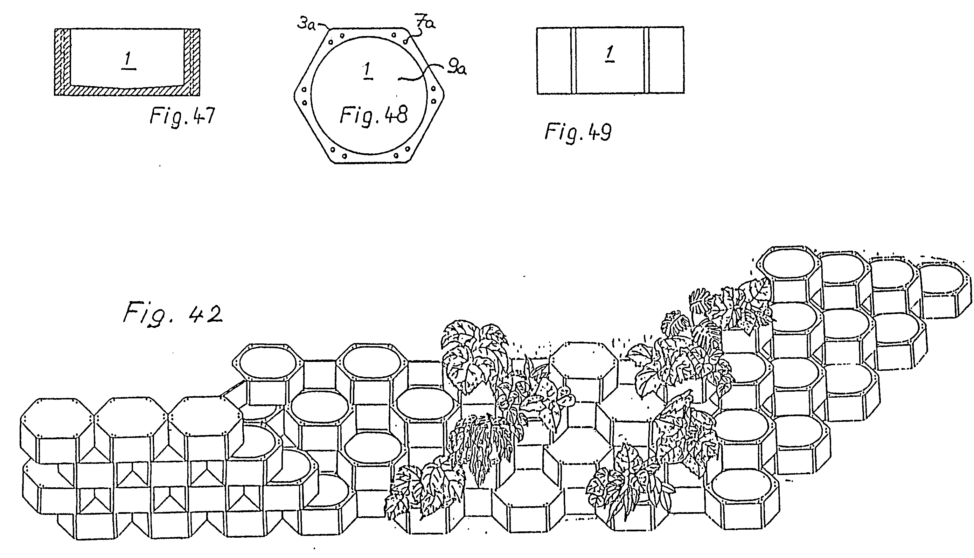

Fig. 47 einen Schnitt durch einen hergestellten Formkörper,

Fig. 48 eine Aufsicht auf den Formkörper nach Fig. 47,

Fig. 49 eine Seitenansicht des Formkörpers nach Fig. 47 und

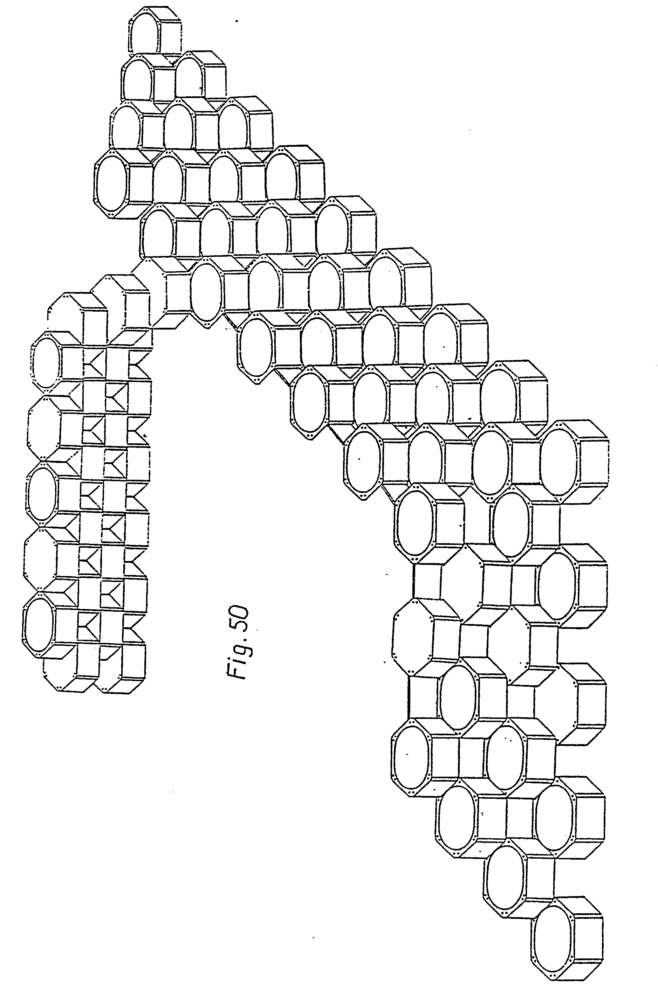

Fig. 50 ein weiteres Anwendungsbeispiel der Formkörper.

Im Verfahren wird das Mischgut aus sauberem, feinkörnigem Brechkies mit Zement gemischt und erdfeucht in ein Silo 73 einer Beschickungsanlage 60 eingegeben.

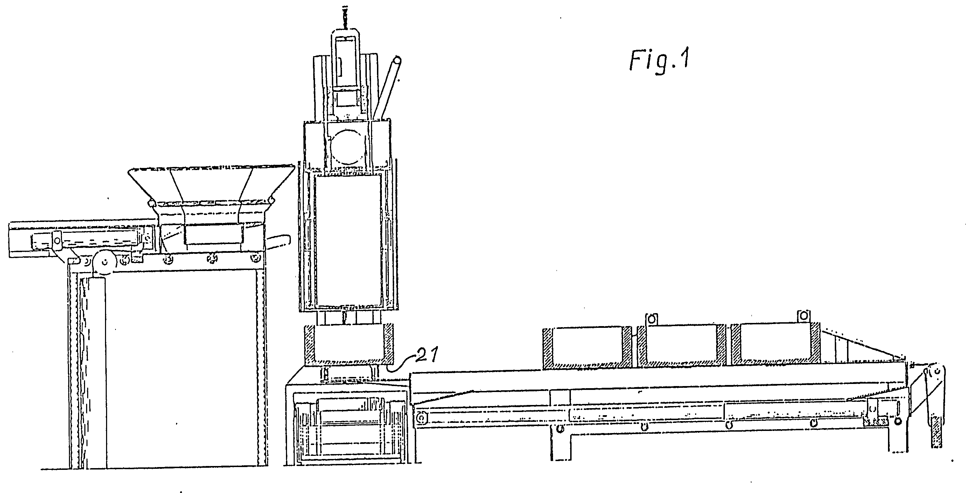

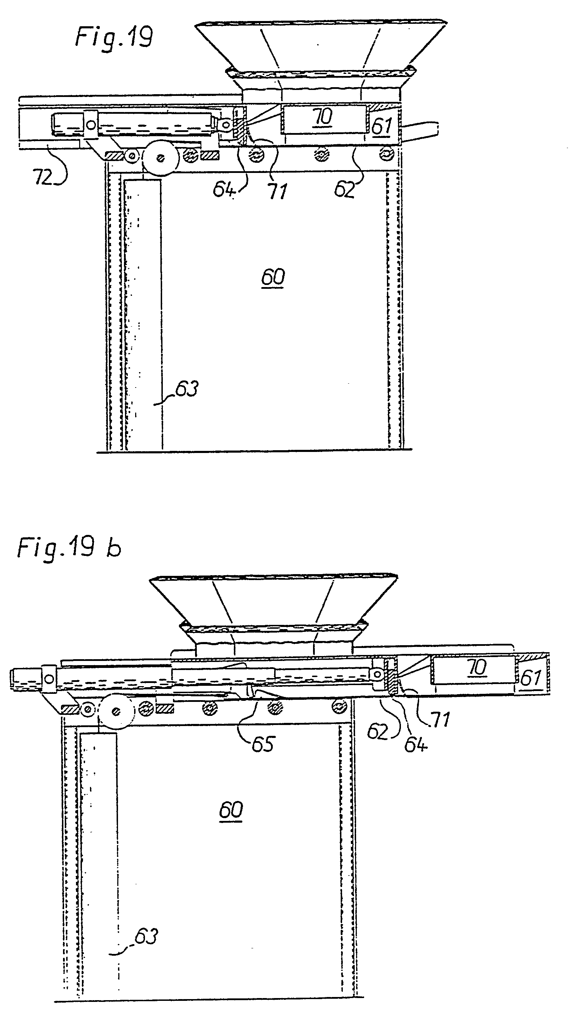

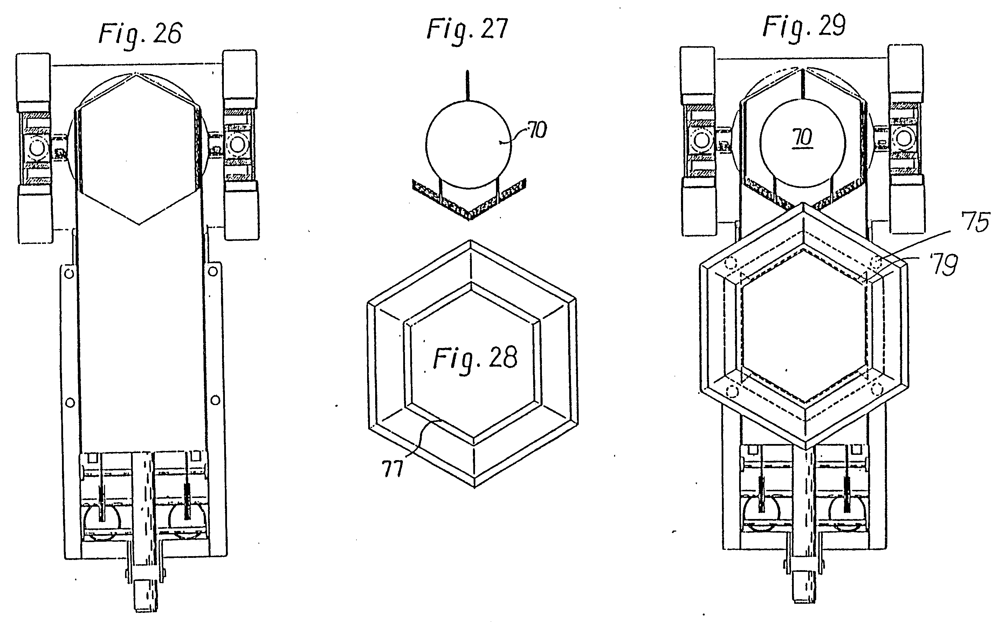

Dieses Silo 73 ist allgemein in den Fig. 1–3, 19, 19 b und 40 in der Seitenansicht und in den Fig. 28 und 29 in der Aufsicht dargestellt. Gemäss den Fig. 37–40 weist das Silo 73 einen Silountersatz 74 auf. Weiter ist das Silo 73 mit Silostützen 75 verbunden, wobei in der Fig. 29 die Anordnung derselben mit strichlinierten Kreisen gezeigt ist. Bei den Silostützen 75 sind Auflaufbelaster 76 für ein noch zu beschreibendes Schubfach 61 angebracht. Am Silountersatz 74 sind in den Fig. 38, 39 und 29 gezeigte Wangenreiniger 79 angeordnet, die zum Reinigen der Innenwände des Schubfaches 61 dienen. Das Mischgut fällt aus dem Silo 73 in das Schubfach 61.

Mit dem Schubfach 61 wird die erforderliche Mischtgutmenge über einen Formraum 11 geschoben.

Fig. 26 zeigt eine Aufsicht und Fig. 41 einen Längsschnitt durch das Schubfach 61. Dabei ist in Figur 41 das Schubfach 61 mit zurückgezogenem Schiebeboden 62 gezeigt. Der Schiebeboden 62 ist über Drahtseile mit Zuggewichten 63 verbunden, von welchen eines in der Fig. 45 gezeigt ist. Diese Drahtseile sind über Briden, welche durch im hinteren Teil des Schiebebodens 62 angeordnete Löcher (siehe Fig. 41) verlaufen, mit dem Schiebeboden 62 verbunden. Diese Zuggewichte 63 sind in Dämmrohren 63 b angeordnet, welche in der Fig. 44 dargestellt sind und dazu dienen, unter den sich absenkenden Zuggewichten 63 ein Luftkissen entstehen zu lassen, um die Absenkbewegung der Zuggewichte 63 und Zurückziehbewegung des Schiebebodens 62 zu dämpfen.

Die Bewegung des Schubfaches 61 erfolgt mittels eines in der Fig. 46 gezeigten Hydraulikzylinders, dessen Einbaulage auch in den Fig. 1–3 gezeigt ist. Wie schon erwähnt wurde, ist das Schubfach 61 in der Fig. 41 in der Füllstellung, also mit bereits zurückgezogenem Schiebeboden 62 dargestellt. Zu bemerken ist, dass ein Arretierbalken 64, der quer zum Schubfach 61 verläuft, in der gezeichneten Führung in vertikaler Richtung frei beweglich ist. Beim Zurücklaufen des Schubfaches 61 bei festgehaltenem Schiebeboden 62, d.h. aus der Stellung nach Fig. 41, gleitet der vertikal bewegliche Arretierbalken 64 über einen mit dem Schiebeboden verbundenen Arretiernocken 65 und rastet hinter dem Arretiernocken 65 in eine Nut ein. In dieser Nut ist vorgängig ein Schenkel eines schwenkbaren Blockierbügels 68 eingerastet gewesen, mittels dem der Schiebeboden 62 bei der Zurückbewegung arretiert gehalten wurde. Aus der Fig. 41 ist ersichtlich, dass der zurücklaufende Arretierbalken 64 den Blockierbügel 68 wegschwenkt, um den Platz in der -genannten Nut anstelle des Schenkels des Blockierbügels einzunehmen. Wird nun das Schubfach 61 mittels Betätigung des Hydraulikzylinders über den Formenraum 11 geschoben, wird der Schiebeboden 62 durch den Blockierbügel 68 eingerasteten Arretierbalken 64 mitgenommen.

In der Endposition des Schubfaches 61 wird im Schubfach 61 der Schiebeboden 62 ausgeklinkt. Dazu dient ein Ausklinker 66, der in der Fig. 24 in einer Aufsicht dargestellt ist. Beim Vorschieben des Schubfaches 61 läuft der Arretierbalken 64 am Ausklinker 66 auf, welcher Ausklinker 66 aus zwei in der Fig. 24 gezeigten Laschen besteht. Ein jeweils beiderseits des Schubfaches 61 angeordneter Ausklinknocken 67, der ebenfalls in der Fig. 24 dargestellt ist und in der Fig. 41 als links neben dem Arretierbalken 64 gezeigter Kreis dargestellt ist, liegt bei aufgelaufenem Arretierbalken 64 am Ausklinker 66 an. Dabei liegt der Ausklinknocken 67 unterhalb des in der Fig. 43 mit einem kleinen Kreis gezeichneten Schwenkzapfens des jeweiligen Ausklinkers 66 an, so dass letzterer im Gegenuhrzeigersinn geschwenkt wird und folglich der auf dem äussersten, waagrechten Oberseitenabschnitt des Ausklinkers 66 liegende Arretierbalken 64 ebenfalls in seinen Führungen angehoben wird. Somit bewegt sich der Arretierbalken 64 von hinter dem Arretiernocken 65 nach oben und gibt den Schiebeboden 62 frei.

Damit wird in der genannten Endposition im Schubfach 61 der Schiebeboden 62 ausgeklinkt, mit den Zuggewichten 63 zurückgeschleudert und von Schiebebodenstoppern 72 aufgefangen.

Während das Schubfach 61 durch den Hydraulikzyliner zur Wiedereinfüllung unter das Silo 73 zurückgeschoben wird, bleibt der Schiebeboden 62 durch die hinter den Arretiernocken 65 liegenden Schenkel der Blockierbügel 68 an Ort, bis der Schiebeboden 62 das Schubfach 61 wieder schliesst. Während das Schubfach 61 zurückgezogen wird, wird es durch den Schubfachreiniger 77, der mit dem Untersatz 74 des Silos 23 (Fig. 28 und 40) verbunden ist, gereinigt. Wangen 78 verhindern ein seitliches Hinunterfallen des Mischgutes, um die darunter vorhandenen Arbeitsteile der Vorrichtung sauber zu halten. Dabei gleitet (Fig. 41) der Arretierbalken 64 über den Arretiernocken 65, fällt hinter ihm hinunter und schwenkt gleichzeitig den Blockierbügel 68 nach oben. In der in der Fig. 41 gezeichneten Stellung des Blokkierbügels 68 liegt er mit seinem längeren Schenkel an einer Blockierstütze 69 an, und darum ist der Schiebeboden 62 am weiteren Zurücklaufen gehindert. Aus den Figuren 41 und 43 ist es offensichtlich, dass bei angehobenem längerem Schenkel des Blockierbügels 68 dieser Schenkel über der Blockierstütze 69 hinweggleitet.

Wenn der Schiebeboden 62 zurückgeschleudert wird, fällt das Mischgut in einen Formraum 11, wobei ein Reduktionseinsatz 70 im Schubfach 61 die Mischgutverteilung im Formraum 11 anordnet.

Der Reduktionseinsatz 70 ist in den Fig. 27 und 29 in der Aufsicht und in der Fig. 41 im Schnitt dargestellt. Der Reduktionseinsatz 70 dient zum Vorformen des Mischgutes, bevor dieses in den eigentlichen Formraum fällt. In der Fig. 41 ist ein Schiebebodenreiniger 71 dargestellt, der in der Aufsicht nach Fig. 27 ein V-förmiger, mit dem Reduktionseinsatz 70 verbundener Bauteil ist.

Während der Zurückbewegung des Schubfaches 61 wird von Hand ein Formkörperlagerblech 21, das entsprechend noch näher zu beschreibenden Aussparungseisen 7 gelocht ist, von Hand in den Formraum 11 auf das Mischgut gelegt. Das Formkörperlagerblech 21 ist in den Fig. 24, 34 gezeigt.

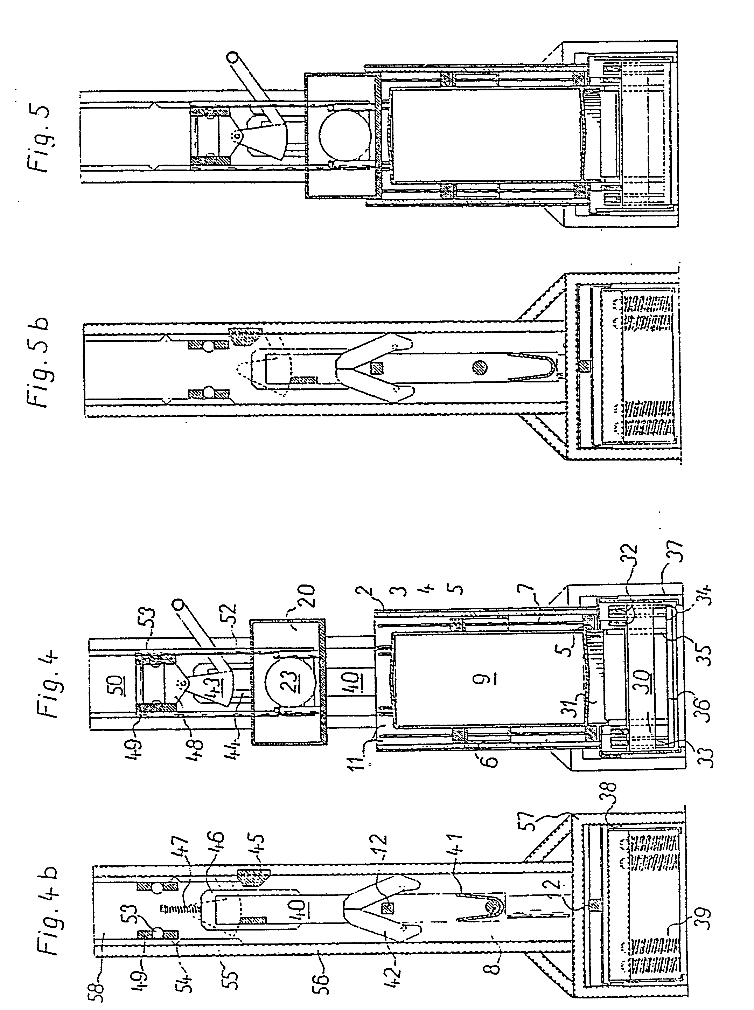

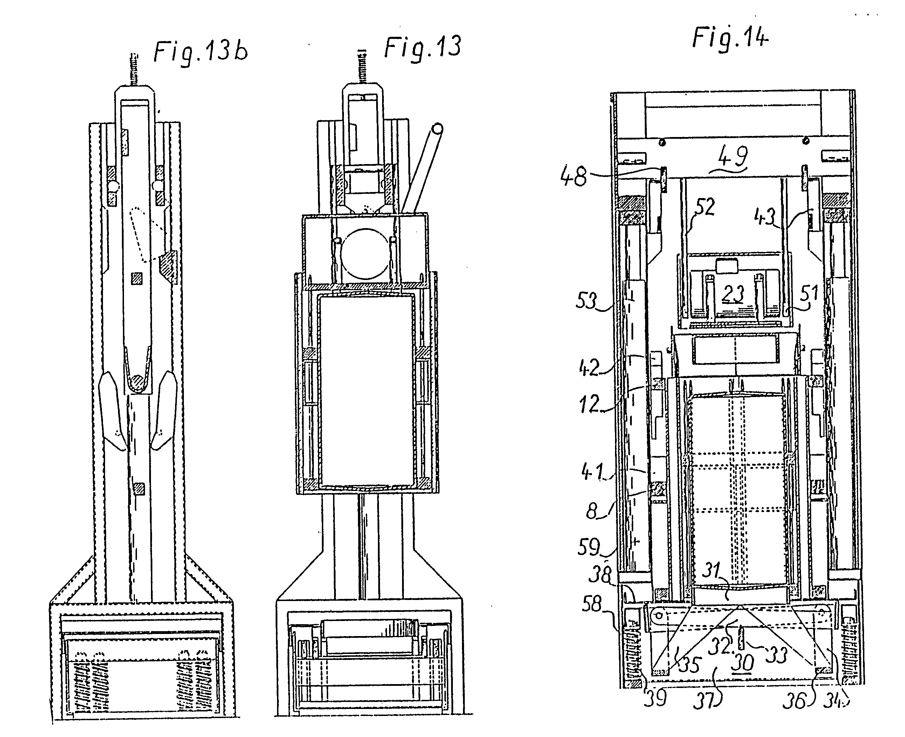

Der Formraum 11 ist in der Aufsicht in der Figur 34, im Schnitt in den Fig. 4 und 14 gezeigt. Er ist von einem Formmantel 2 umschlossen, der in den Fig. 4 und 32 besonders deutlich gezeichnet ist. Im Formmantel 2 sind sechs Einbautafeln 4 zur äusseren Wandformgebung des zu bildenden Formsteins eingesetzt. Innen ist der Formenraum 11 durch einen Kern 9 begrenzt, welcher in den Fig. 4 und 30 im axialen Schnitt und in der Figur 34 in der Aufsicht gezeigt ist. Fig. 31 ist eine Seitenansicht des Kerns 9. Im Raum zwischen dem Kern 9 und den Einbautafeln 4 (siehe Fig. 32 und 34) sind zwei Kronenringe 5 angeordnet, die wie in Fig. 35 gezeigt ist, über Kronenringstützen 15 miteinander verbunden sind. Diese Kronenringe 5 sind zusammen mit den Kronenringstützen 15 axial verschiebbar angeordnet.

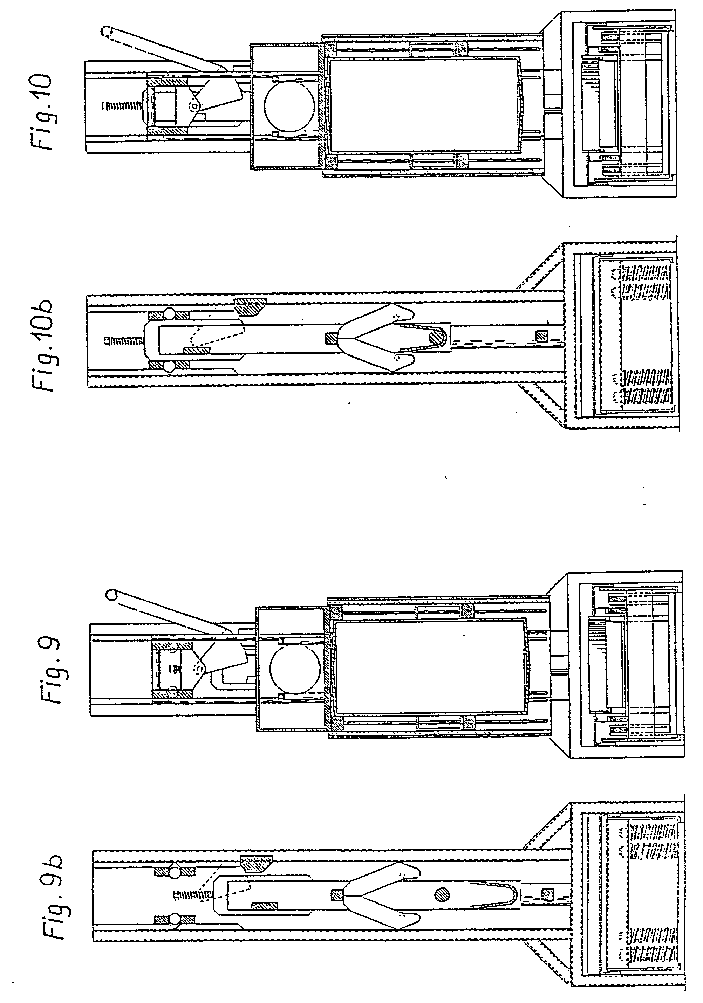

Der Formmantel 2 ist diametral beidseitig mit einer Formlagerwelle 8 verbunden, die im Querschnitt in der Figur 4b, im Längsschnitt in der Fig. 14 und in der Aufsicht in der Fig. 8 dargestellt. Weiter weist der Formmantel 2 zwei Paare Hängenocken 12 mit quadratischem Querschnitt auf, die oberhalb und unterhalb der Formlagerwelle 8 angeordnet sind. Diese sind im Querschnitt in der Fig. 4b und im Längsschnitt in der Fig. 14 gezeichnet.

Die oben erwähnten Einbautafeln 4, die aus Abnützungsgründen austauschbar sind, sind durch in der Fig. 34 gezeigte Manschetten 13 geführt und gehaltert. Die Manschetten 13 sind über Schraubenbolzen 14 mit dem Formmantel verschraubt. Weiter sind in den Fig. 32 und 34 gezeichnete Eckstäbe 3 vorhanden, die zum gegenseitigen Stützen der Einbautafeln 4 dienen.

Im Formmantel 2 sind zwei Fixieröffnungen 16 vorhanden, wovon eine in der Fig. 32 dargestellt ist. Vom Kern 9 stehen beidseitig Exzenterwellen 18 ab, auf denen Exzenter 19 drehbar angeordnet sind, wie in der Fig. 31 dargestellt ist. In der Fig. 34 sind die Exzenterwellen 18 mit dem jeweiligen Exzenter 19 in der Aufsicht gezeichnet. Die Exzenter 19 liegen in der oben erwähnten Fixieröffnung 16 nach Fig. 32.

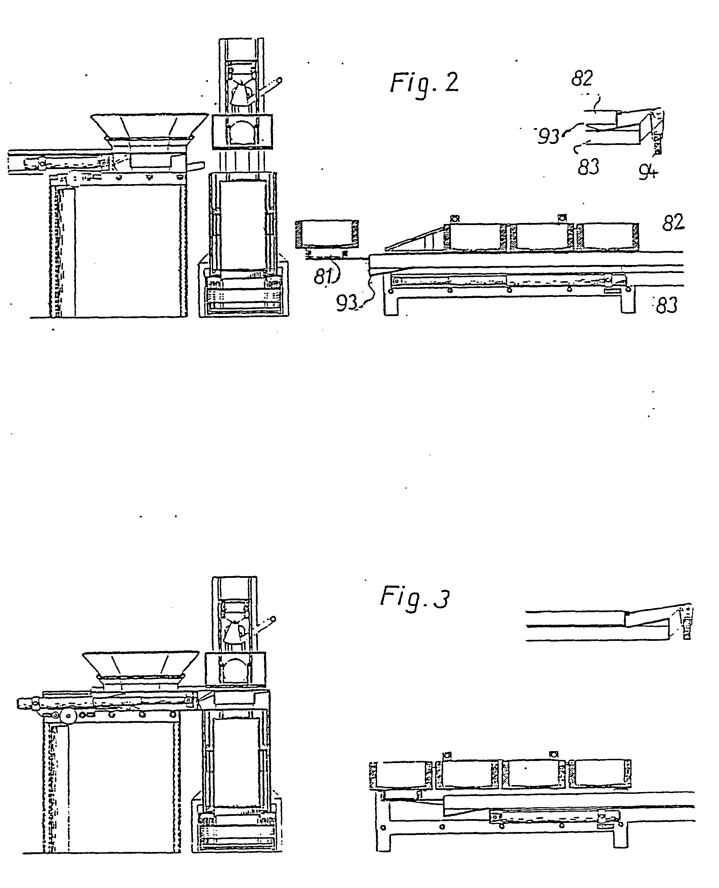

Weiter sind im Formraum Aussparungseisen 7 vorhanden, die zum Bilden der Aussparungen im Formkörper dienen und die in den Fig. 3, 4 und 5 gezeichnet sind. Die Aussparungseisen 7 sind mit einem Anschlagring 6 verbunden. Dieser dient zur Begrenzung der Längsverschiebung der Kronenringe 5 im Formraum, steht fest und ist mit den Einbautafeln 4 verbunden.

Zu beiden Seiten der Formkörperform 10 befindet sich je eine Hebesäule 40, welche Hebesäulen 40 Hydraulikzylinder 59 (Fig. 14) sind und die in den Fig. 4 b und 15 gezeichnet sind. Die Hebesäulen 40 tragen je einen Lagersattel 41, in welchem die Formlagerwelle 8 der Formkörperform 10 gelagert ist.

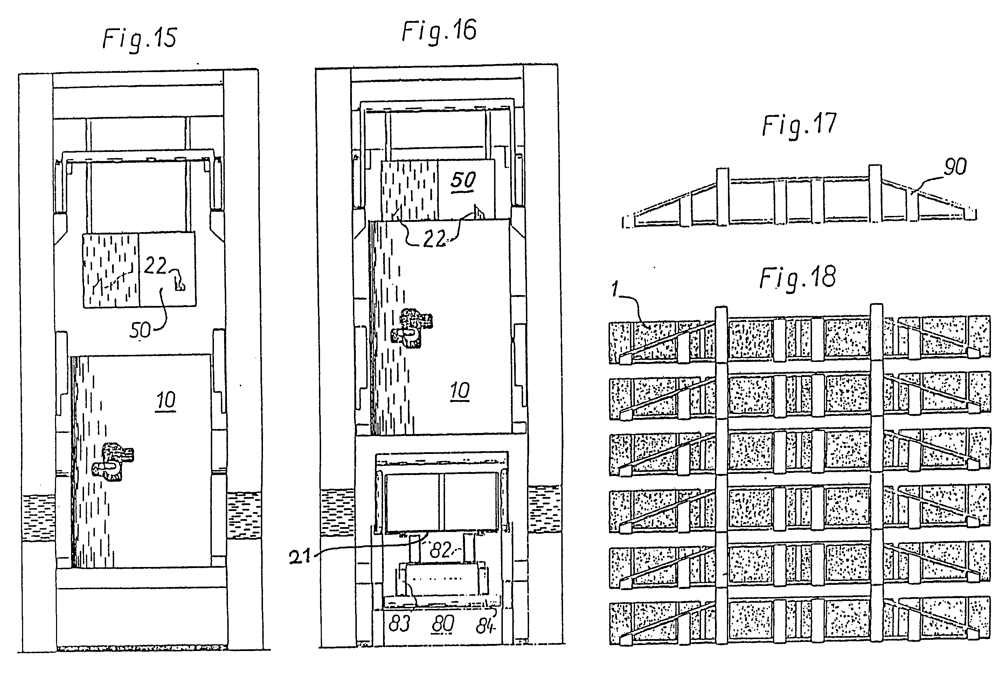

Ein Pressvibriergehäuse 20 einer Vibrierpresse 50 (Fig. 15, 16), innerhalb welchem Gehäuse 20 ein Vibrator 23 angeordnet ist, ist fest mit Blockierschuhen 51 verbunden, die in der Fig. 14 dargestellt sind. Das Pressvibriergehäuse 20 ist über diese Blockierschuhe 51 an Blockierstützen 52 aufgehängt. Diese sind ihrerseits mit Jochwangen 49 (Fig. 4) verbunden, die wiederum über ein Joch 48 miteinander verbunden sind. Das Joch 48 ist über wegschwenkbare Arretierbacken 43 auf Arretiernocken 44 abgestützt, welche Arretiernocken 44 schliesslich mit den Hebesäulen 40 verbunden sind. Werden also die Hebesäulen 40 ausgefahren, wird das Pressvibriergehäuse 20 über die obigen Bauteile angehoben.

Wird nun zum Pressvibrieren das Pressvibriergehäuse 20 auf das Formkörperlagerblech 21 abgesenkt, geschieht dies, indem die Hebesäulen 40 abgesenkt werden. Damit bewegt sich das Pressvibriergehäuse nach unten, bis zur Auflage auf das Formkörperlagerblech 21. Liegt das Vibriergehäuse 20 auf dem Formkörperlagerblech 21 auf, bewegen sich die Hebesäulen 40 noch weiter nach unten, so dass sich die nun feststehenden, mit dem Vibriergehäuse 20 verbundenen Blockierschuhe 51 von den Blockierstützen 52 entfernen, so dass die Hydraulikzylinder von der folgenden Vibration entlastet werden.

Das Pressvibrieren dauert ca. drei Sekunden, bis Massanschläge 22 (Fig. 15 und 16) am Pressvibriergehäuse 20 auf der Formkörperform 10 anstehen, so dass der Formkörper 1 massgenau wird. Die Massanschläge 22 liegen dabei auf den Manschetten 13.

Die ausgeglichene Vedichtung von Boden und Wandpartie des Formkörpers 1 wird gewährleistet, indem der Kern 9 über eine Hebelwaage 30 mit der Formpartie, d.h. den Teilen 2–8, während dem Pressvibrieren den Pressdruck reguliert.

Die Hebelwaage 30 ist in der Fig. 4 und insbesondere der Fig. 14 dargestellt. Der Kern 9 liegt auf einem Kernlagerring 31 auf. Der Kernlagerring 31 ist mit einer Verbindungsbrücke 35 fest verbunden. Diese ist fest mit Hebeltraversen 36 verbunden. Die Hebeltraversen 36 sind mit Hebellaschen 34 verbunden. Diese Hebellaschen 34 sind an Hebeln 32 angelenkt, welche auf einem Sattel 33 schwenkbar gelagert sind. Die Hebel 32 stützen einen Hebetisch 38, auf welchem der Formmantel 2 abgestützt ist. Bewegt sich also der Kern 9 nach unten, wird der Formmantel 2 nach oben bewegt. Die zu vibrierende Formkörperform 10 sowie die Hebelwaage 50 sind über Sockelfedern 39 abgestützt. Die Bezugsziffer 37 bezeichnet die Verschalung der Hebelwaage 30.

In der Endphase des Pressvibrierens wird der Kern 9 mit dem Exzenter 19 in der Fixieröffnung 16 des Formmantels 2 fixiert.

Es wird auf die Fig. 31 und 32 verwiesen. Der Exzenter 19 ist drehbar auf der Welle 18 gelagert. Damit können Massungenauigkeiten (Toleranzen) in der Öffnung 16 aufgenommen werden. So kann der Kern 9 zusammen mit dem Formmantel 2 angehoben werden.

Am Ende des Pressvibrierens wird die Formkörperform 10 auf eine Schwenkhöhe angehoben und mit dem sich im Formraum 11 befindlichen Formkörper 1 um 180° nach unten geschwenkt.

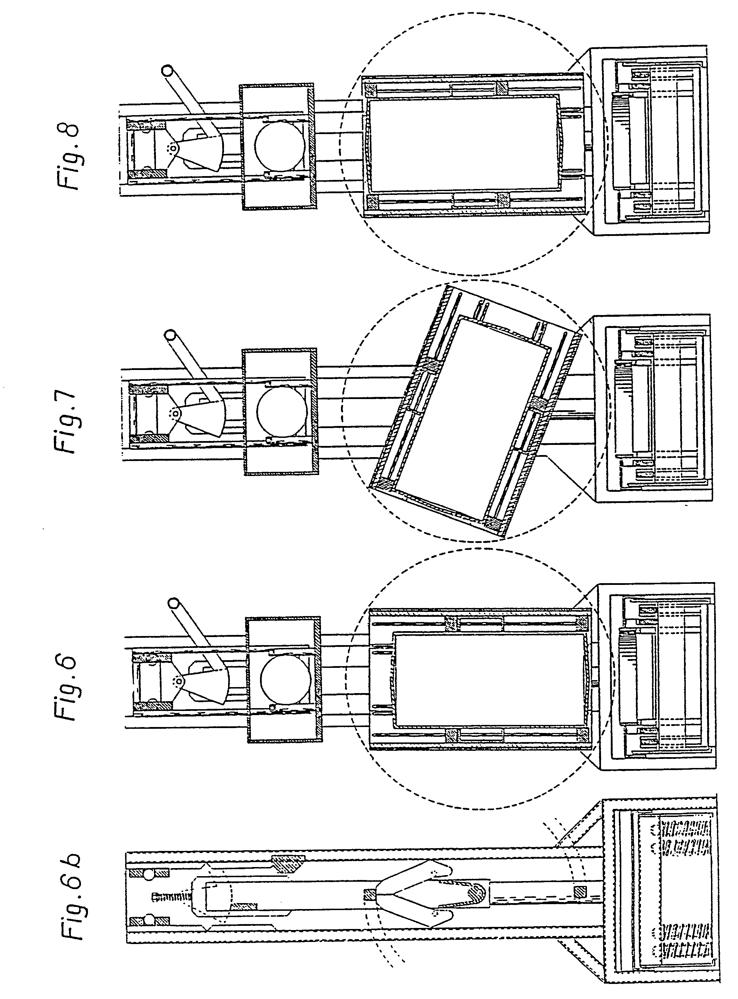

Die Formkörperform 10 wird angehoben, indem die Hebesäule 40 ausgefahren wird, siehe Fig. 4 b und auch 14. Damit wird der Sattel 41 (Fig. 4 b) angehoben. Er hebt seinerseits die Formlagerwelle 8 und somit die Formkörperform 10 bis zu einer Schwenkhöhe, welche Stellung in der Fig. 6 gezeichnet ist. Es ist zu bemerken, dass beim Anheben zuerst das Pressvibriergehäuse 20 angehoben wird. Erst nachdem die Hebesäule 40 das Pressvibriergehäuse 20 um eine gewisse Strecke angehoben hat, gelangt der Sattel 41 zur Anlage an und zum Tragen der Formlagerwelle 8. Wenn die Formkörperform 10 in der Schwenkhöhe ist, wird sie um 180° geschwenkt. Diese Schwenkbewegung ist in den Fig. 6–8 gezeichnet.

Nachfolgend wird nun die Entnahme und das Wegfördern des Formkörpers mittels der Förderanlage 80 beschrieben.

Wähend des Schwenkens der Formkörperform 10 wird gleichzeitig ein Ausleger 82 mit einem Schubbalken 83 der Förderanlage 80 vorgeschoben, bis ein Stabilisator 81 unter dem Formkörper 1 zentriert ist. Die Lenkrollen 85 stoppen bei einem Widerstand 86 den Ausleger 82.

Es wird Bezug auf die Fig. 2 und die Fig. 21 genommen. Ein in der Fig. 2 gezeigter Hydraulikzylinder schiebt den Schubbalken 83 nach vorne. Der Schubbalken 83 weist vorne eine nach unten und hinten eine nach oben verlaufende Schräge auf. Diese vordere Schräge ist als Gleitsteigung 93 (Fig. 2) bezeichnet. Aufgrund der Gleitsteigung 93 nimmt der Schubbalken 83 den auf ihm liegenden Ausleger 82 nach vorne mit (Fig. 21). Der Ausleger 82 ist beidseitig mit den Lenkrollen 85 ausgerüstet. Nach einer gewissen Vorschubstrecke kommen diese Lenkrollen 85 zur Anlage an einem feststehenden Anschlag 86. Diese Stellung ist in der Fig. 21 gezeichnet. Bei nun somit feststehendem Ausleger 82 bewegt sich der Schubbalken 83 weiter (in der Fig. 21 nach links). Durch die Schräge der Gleitsteigung 93 wird somit der Ausleger 82 hochgehoben (die Lenkrollen 85 rollen entlang dem Anschlag 86 vertikal aufwärts), und somit wird der vorne auf dem Ausleger 82 angeordnete Stabilisator 81 von unten her zur Auflage an den Formkörper 1 angehoben.

Also erfolgt zum Schubbalken 83 eine Verschiebung des Auslegers 82, womit durch die Gleitsteigungen 93 der Ausleger 82 angehoben wird, womit ein jeweiliger Formkörper 1 in einem Lagergestell 90 und der Stabilisator 81 angehoben werden, bis die Belastung von Druckfedern im Stabilisator 81 mindestens dem Fördergewicht entsprechen.

Gleichzeitig wird das Pressvibriergehäuse 20 mit seinen Blockierschuhen 51 auf den Kronenring 5 gesenkt, damit hängt die Formkörperform 10 mit den Hängenocken 12 auf Formhängestützen 42.

Fig. 6 zeigt die Stellung der Formkörperform 10 vor dem Schwenken. Fig. 7 zeigt eine Zwischenstellung und Fig. 8 die um 180° gedrehte Stellung der Formkörperform. Die Hebesäulen 40 werden abgesenkt, bis das Pressvibriergehäuse 20 mit seinen Blockierschuhen 51 (siehe Fig. 14) auf dem Kronenring 5 (siehe Fig. 5 und Fig. 4) aufliegt. Diese Endstellung ist in der Fig. 9 gezeichnet.

Die Arretierungsbacken 43, siehe Fig. 4, werden manuell durch Betätigung des davon schief abstehenden Armes im Gegenuhrzeigersinn in die in der Fig. 9 gezeigten Stellung ausgeschwenkt, somit vom Arretiernocken 44 (Fig. 4) weggeschwenkt.

Somit werden bei einem weiteren Heben der Hebesäule 40, welche Bewegung ein weiteres Heben des Arretiernockens 44 verursacht, die nun weggeschwenkten Arretierungsbacken 43 nicht mehr mitgenommen. Folglich bleibt das Pressvibriergehäuse 20 auf der Formkörperform 10 liegen.

Die Arretierungsbacken 43 sind also nun von den Arretiernocken 44 auf Stütznocken 45 (Fig. 4 b) verlagert. Die Hebesäulen 40 werden weiter angehoben. Kronenringregler 46 pressen mit ihren Aussenseiten entlang Gleiteinsätzen 55 geführte Arretierungszylinder 53 in Arretierungskerben 54 (siehe Stellung nach Fig. 9 b), so dass nun die Jochwangen 49 blockiert sind und somit auch die Blockierstützen 52 zu den Blockierschuhen 51 blockiert sind, die das Kronenringpaar 5 und damit den Formkörper 1 niederhalten. Die Gleiteinsätze 55 sind an Wangen 56 (Fig. 4 b) befestigt, die auf einem Wangensockel 57 abgestützt sind, der seitlich eine Verschalung 58 aufweist. Dabei wird die Formkörperform 10 immer noch weiter nach oben bewegt. Während die Hebesäule 40 mit den Lagersätteln 41 die Formlagerwellen ergreift, welche Stellung in den Fig. 10 und 10 b gezeigt ist, wird der Kern 9 mittels eines Handschafts 17 manuell mit begrenzter Drehung (siehe Fig. 34) aus der Fixierung befreit, was nebenbei die Haftung des Mischgutes am Boden des Kernes 9 verhindert.

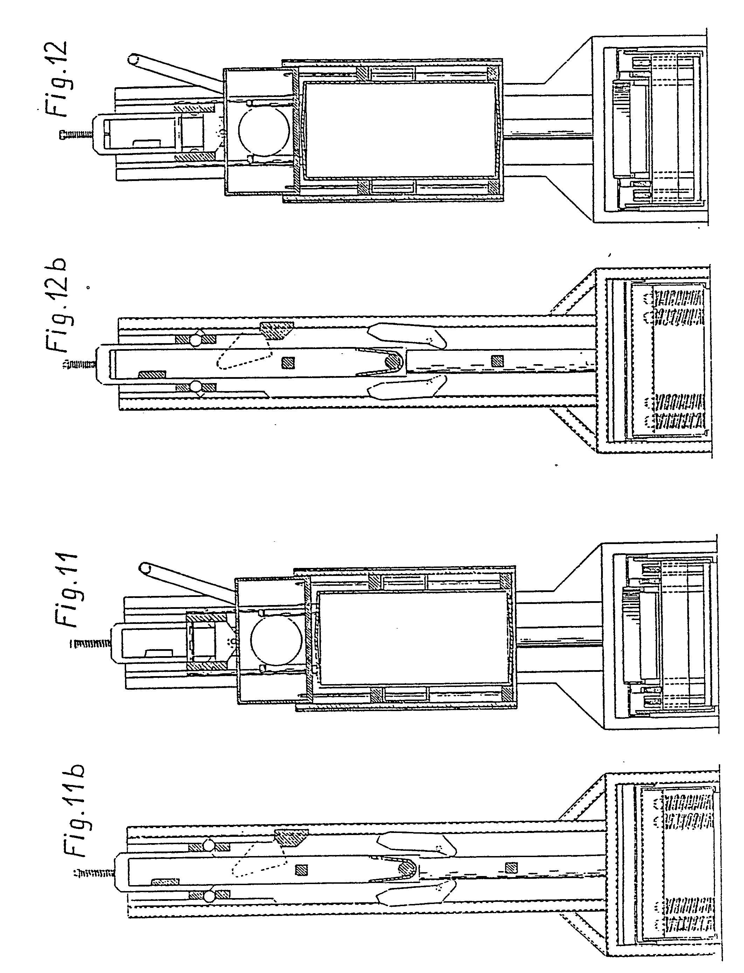

Die Formkörperform 10 wird durch ein weiteres Heben der Hebesäulen 40 ganz hochgepresst, siehe Fig. 11 und 11 b, bis der Formkörper 1 entformt ist.

Beim weiteren Anheben der Hebesäulen 40 entfernen sich die Schenkel des Kronenringreglers 46 von den Arretierungszylindern, wobei die in den Fig. 12 und 12 b gezeichnete Stellung erreicht ist. Folglich können sich beim fortgesetzten Anheben der Hebesäulen 40 die Arretierungszylinder 53 aus den Arretierungskerben 54 lösen, indem die Kronenringregler 46 gegen Druckfedern 47 (Fig. 4 b) hochgepresst werden. Damit kann sich das Kronenringpaar 5 mit der Formkörperform 10 vom entformten Formkörper 1 abheben, der somit vollständig entformt auf dem Stabilisator 81 der Förderanlage 80 lagert. Der Stabilisator 81 ist zusätzlich mit Förderkonsolen 92 (Fig. 20) ausgerüstet, die ein Durchbiegen des den Formkörper 1 tragenden Formkörperlagerbleches 21 verhindern.

Es wird nun weiter das Wegfördern des Formkörpers 1 beschrieben. Die Ausgangsstellung ist in der Fig. 21 gezeigt. Der arretierte und durch die Gleitsteigungen 93 hochgehobene Ausleger 82 trägt den auf dem Stabilisator 81 liegenden Formkörper 1.

Der auf Förderwalzen 84 gelagerte Schubbalken 83 bewegt sich mit dem Ausleger 82 zurück, d.h. in der Fig. 21 nach rechts. Ein Absenknocken 87 kommt zur Anlage an einen feststehenden Widerstand 89. Es erfolgt eine Relativverschiebung zwischen dem Ausleger 82 und dem Schubbalken 83, der Ausleger 82 gleitet entlang der Schiefe so lange abwärts, bis der Absenknocken 87 unter dem Widerstand 89 hindurchbewegt werden kann. Durch diese Rechts- und erste Absenkbewegung werden alle schon auf dem Ausleger 82 liegenden Formkörper 1 auf Lagerkonsolen 91 im Lagergestell 90 um jeweils eine Position nach rechts verschoben und abgesetzt.

Bei der weiteren Verschiebung des Schubbalkens 83 mit dem Ausleger 82 nach rechts erreicht ein Anschlag 88 des Auslegers 82 den Widerstand 89. Damit erfolgt eine weitere Gleitverschiebung des Auslegers 82 auf dem Schubbalken 83, folglich eine zweite Absenkung des Auslegers 82. Damit wird der Formkörper 1 vom Stabilisator 81 auf die stets frei werdende Position abgesetzt.

Unter Bezugnahme auf Fig. 2 ist noch zu bemerken, dass der Ausleger 82 mit einer Gegenlast 94 verbunden ist. Diese verhindert ein ungewolltes bzw. unkontrolliertes Abgleiten des Auslegers 82 auf den Schrägen des Schubbalkens 83.

## Patentansprüche

1. Verfahren zur Herstellung von vieleckigen Formkörpern 1 mit einem zylinderförmigen Innenraum (9 a) und Verankerungsaussparungen (7 a) in den Eckpartien (3 a) ihrer Wände aus einem Gemisch aus feinkörnigem Brechkies und Zement, das mittels Pressen und Vibrieren erdfeucht verdichtet wird, bei dem das erdfeuchte Mischgut in ein Silo (73) einer Beschickungsanlage (60) eingegeben wird, welche Beschickungsanlage (60) ein Schubfach (61) mit einem verschiebbaren Schiebeboden (62) aufweist, in welchem Schubfach (61) ein Reduktionseinsatz (70) angeordnet ist, welcher die Formeinfüllung des Gemisches regulierend und pressvibrierfertig verteilt, dass das Schubfach (61) mit dem darin vorhandenen Mischgut über den Formraum (11) einer Formkörperform (10) geschoben wird, dass danach der Schiebeboden (62) ausgeklinkt und mittels Zuggewichten (63) schlagartig bis zur Anlage an einen Schiebebodenstopper (72) der Beschickungsanlage (60) zurückgeschleudert wird, so dass das Mischgut als kompakte Masse in den Formraum (11) fällt, in welchem Formraum (11) ein Kern (9) und Aussparungseisen (7) vorhanden sind, welche dazu dienen, den zylinderförmigen Innenraum (9 a) und die Verankerungsaussparungen (7 a) in den Eckpartien (3 a) des Formkörpers (1) auszubilden, dass das im Formraum (11) angeordnete Mischgut mittels einer Press- und Vibriervorrichtung (20) verdichtet wird und dass das Entformen des Formkörpers (1) durch ein Anheben der Formkörperform (10) mittels einer Hebesäule (40) erfolgt und dieser mittels einer Förderanlage (80) weggefördert wird.

2. Verfahren nach Anspruch 1, dadurch gekennzeichnet, dass das Schubfach (61) zur Wiedereinfüllung in ihre Ausgangsstellung unter dem Silo (73) geschoben wird, wobei der Schiebeboden (62) über Blockierbügel (68) an Blockierstützen (69) so lange verankert bleibt, bis ein Einklinken eines Arretierbalkens (64) an Arretierungsnocken (65) erfolgt, und dass zum Ausklinken des Schiebebodens (62), um diesen den Zuggewichten (63) zum Zurückschleudern freizugeben, Ausklinknocken (67) Ausklinker (66) hochpressen und damit den Arretierungsbalken (64) anheben.

3. Verfahren nach den Ansprüchen 1 und 2, dadurch gekennzeichnet, dass beim Zurückschleudern die Zuggewichte (63) in jeweils einem Dämmrohr (63 b) gleiten, derart, dass in der Anzugsphase derselben ihre Zuglast voll zur Geltung kommt und danach durch eine zunehmende Luftverdichtung in den Dämmrohren (63 a) die Zuglastwirkung abnimmt.

4. Verfahren nach Anspruch 1, dadurch gekennzeichnet, dass ein Formkörperlagerblech (21), das entsprechend den Aussparungseisen (7) im Formraum (11) gelocht ist, auf das im Formraum angeordnete Mischgut aufgelegt wird, dass darauf die Press- und Vibriervorrichtung (20) auf das Formkörperlagerblech (21) abgesenkt wird, wobei die Press und Vibriervorrichtung (20) bewegende Hydraulikzylinder (59) entlastet werden, dass während dem Pressvibrieren Massanschläge (22) an der Formkörperform (10) die Einhaltung der Höhe des Formkörpers (1) gewährleisten, dass der Kern (9) über eine Hebelwaage (30) mit einer Formmantelpartie (2-8) verbunden ist, um damit eine ausgeglichene Verdichtung des Formkörpers (1) zu gewährleisten, und dass der Kern (9) einen Exzenter (19) aufweist, der in einer Fixieröffnung (16) des Formmantels (2) angeordnet ist, und der Kern (9) am Ende der Pressvibrierphase mittels des Exzenters (19) in der Fixieröffnung (16) fixiert wird.

5. Verfahren nach Anspruch 1, dadurch gekennzeichnet, dass nach der Beendigung des Pressvibrierens die Formkörperform (10) bis zu einer Schwenkhöhe angehoben und zusammen mit dem Formkörper (1) um 180° geschwenkt wird, dass mittels eines Schubbalkens (83) der zum Wegfördern des Formkörpers (1) dienenden Förderanlage (80) ein Stabilisator (81) auf einem Ausleger (82) vorgeschoben und an das Formkörperlagerblech (21) gepresst wird, dass gleichzeitig die Pressvibriervorrichtung (20) auf einen von zwei in der Formkörperform (10) längsverschiebbaren Kronenringen (5) abgesenkt wird, womit Hängenocken (12) der Formkörperform (10) zur Auflage auf Formstützen (42) bewegt werden, dass Arretierungsbacken (43) von Arretierungsnocken (44) auf Stütznocken (45) verlegt werden, dass Hebesäulen (40) mit Kronenringreglern (46) und einem Lagersattel (41) angehoben werden, dass die Kronenringregler (46) Blockierzylinder (53) in Blockierkerben (54) pressen, welche Blockierstützen (52) und Blockierschenkel (51) blockieren und das Kronenringpaar (5) mit dem Formkörper (1) niederhalten, dass Lagersattel (41) Formlagerwellen (8) ergreifen, die Formkörperform (10) zum Entformen des Formkörpers (1) anheben, dass dabei der Kern (9) durch eine begrenzte Drehung aus seiner Fixieröffnung (16) befreit wird, welche Drehung zusätzlich ein Haften des Formkörpers (1) am Boden des Kerns (9) verhindert, dass die Kronenringregler (46) in einem zum Entformen erforderlichen Massbereich gegen Druckfedern (47) hochgepresst werden und die Blockierzylinder (53) aus den Blockierkerben (54) gleiten, so dass sich das Kronenringpaar (5) zusammen mit der Formkörperform (10) vom Formkörper (1) abhebt.

6. Verfahren nach Anspruch 1, dadurch gekennzeichnet, dass bei der Entformung des Formkörpers (1) ein Kronenringpaar (5) in der Formkörperform (10) verschoben wird, und dass durch die Verschiebung des Kronenringpaares (5) in der Formkörperform (10) der Formraum (11) in der Formkörperform (10) wechselseitig gebildet wird, derart, dass die Formkörperform (10) beidseitig benützt wird und somit der Arbeitsablauf erleichtert und verkürzt wird.

7. Verfahren nach Anspruch· 5, dadurch gekennzeichnet, dass die Schubbalken (83) den Ausleger ·(82) verschieben, bis der Stabilisator (81) unter dem Formkörper (1) zentriert ist, dass am Ausleger (82) angeordnete Lenkrollen (85) an einem Widerstand (86) auflaufen und damit den Vorschub des Auslegers (82) beenden, dass beim weiteren Verschieben des Schubbalkens (83) zwischen diesem und dem Ausleger (82) eine Verschiebung stattfindet und durch Gleitsteigungen (93) der Ausleger (82) und damit der Formkörper (1) und der Stabilisator (81) angehoben werden, dass darauf der Schubbalken (83) den Ausleger (82) wieder in die Ausgangsstellung schiebt und eine Absenkung des Auslegers (82) in zwei Schritten mittels Absenknocken (87 und 88) an einem Widerstand (89) erfolgt, wobei eine Gegenlast ein unkontrolliertes Abgleiten des Auslegers (82) entlang der Gleitsteigungen (93) verhindert, dass ein auf dem Stabilisator (81) des Auslegers (82) vorhandener Formkörper (1) mit dem Schubbalken (83) der Förderanlage (80) in ein Lagergestell (90) befördert wird und in diesem eine erste Position einnimmt und dass dieser Formkörper (1) mit jedem nachfolgenden Formkörper (1) wieder angehoben und um eine Position verschoben wird, bis sämtliche Lagerstellen im Lagergestell (90) belegt wird.

**Claims**

1. Method of producing polyhedral formed bodies (1) with a cylindrical inner space (9 a) and anchoring recesses (7 a) in the corner sections (3 a) of their walls of a mixture of fine grained broken gravel and cement which is compacted earth damp by compression and vibration, in which the earth damp mixture is charged into a silo (73) of a charging apparatus (60), which charging apparatus (60) is provided with a slide (61) including a movable slide bottom (62), in which slide (61) a reduction insert (70) is located which distributes the form charge of the mixture controllingly and ready for press vibration, that the slide (61) including the mixture located therein is pushed over the form chamber (11) of a form body mold (10), that thereafter the slide bottom (62) is unlatched and slung back by means of pulling weights (63) burst-like up to an abutting a slide bottom stopper (72) of the charging apparatus (60) such that the mixture drops as a compact mass into the form chamber (11), in which form chamber (11) a core (9) and recess irons (7) are provided which serve to shape the cylindrical inner space (9 a) and the anchoring recesses (7 a) in the corner areas (3 a) of the formed body (1), that the mixture located in the form chamber (11) is compressed by a pressing and vibrating apparatus (20), and that the freeing of the formed body from the mold proceeds by a raising of the form body mold (10) by means of a raising pillar (40) and which is transported off by a conveyor (80).

2. Method of claim 1, characterized in that for a refilling the slide (61) is moved back into its starting position under the silo (73), whereby the slide bottom (62) remains anchored at blocking supports (69) until a latching of an arresting beam (64) at an arresting cam (65) is effected and that for an unlatching of the slide bottom (62) to expose it to the pulling weights (63) for the slinging back unlatching cams (67) press unlatchers (66) upwards and accordingly raise the arresting beam (64).

3. Method of claims 1 and 2, characterized in that during the slinging back the pulling weights (63) glide in a respective attenuating tube (63 b) such that during their pulling phase their pulling force is made to act fully and thereafter the pulling force action decreases due to an increasing air compression in the attenuating tubes (63 a).

4. Method of claim 1, characterized in that a formed body supporting plate (21) which is perforated in accordance with the recess irons (7) in the form chamber (11) is placed on the mixture located in the form chamber, that thereafter the pressing and vibrating apparatus (20) is lowered onto the formed body supporting plate (21), whereby the hydraulic cylinders (59) moving the pressing and vibrating apparatus (20) are released, that during the pressure vibrating dimension stops (22) at the form body mold (10) secure the maintaining of the height of the form body (1), that the core (9) is coupled to a mold jacket section (2–8) via a boom scale (30) such to secure an even compression of the formed body (1), and in that the core (9) comprises an eccentric (19) which is located in an arresting opening (16) of the form jacket (2), and the core (9) is arrested at the end of the pressure vibrating phase by means of the eccentric (19) in the arresting opening (16).

5. The method of claim 1, characterized in that after the termination of the pressure vibrating the form body mold (10) is raised up to a pivoting height and pivoted together with the formed body (1) by 180°, that a stabilizer (81) on a boom (82) is advanced by means of a thrusting bar (83) of the conveyor apparatus (80) serving for removal of the formed body (1) and pressed against the formed body supporting plate (21), that simultaneously the pressure vibrating apparatus (20) is lowered onto on of two crown rings (5) which are longitudinally displaceable within the form body mold (10), whereby suspension cams (12) of the form body mold (10) are moved into contact onto mold supports (42), that arresting cams (44) are placed onto supporting cams (45), that raising pillars (40) are raised together with crown ring controllers (46) and a supporting saddle (41), that the crown ring controllers (46) urge blocking cylinders (53) into blocking notches (54), which block blocking supports (52) and blocking shoes (51) and hold the crown ring pair (5) with the formed body (1) down, that supporting saddles (41) engage mold bearing shafts (8) which raise the form body mold (10) for freeing the formed body (1) from the mold, that thereby the core (9) is freed from its arresting opening (16) by a limited rotation, which rotation also prevents an adhering of the formed body (1) on the bottom of the core (9), that the crown ring controllers (46) are pressed upward against pressure springs (47) within a dimensional range for the freeing of the formed body (1) form the mold, and the blocking cylinders (53) slide out of the blocking notches (54), such that the pair of crown rings (5) lift off from the formed body (1) together with the form body mold (10).

6. Method of claim 1, characterized in that during the freeing of the formed body (1) from the mold a pair of crown rings (5) are displaced in the form body mold (10), and that due to the displacing of the pair of crown rings (5) in the form body mold (10) the form body mold (10) is designed for alternative both sided operation, such that the form body mold (10) is used at both sides, whereby the operation is facilitated and shortened.

7. Method of claim 5, characterized in that the thrusting bars (83) displace the boom (82) until the stabilizer (81) is centered under the formed body, that guide rollers (85) arranged at the boom (85) come to abut a resistor (86) and thus terminate the advance of the boom (82), that upon a continued moving of the thrusting bar (83) a relative displacement between said bar and the boom (82) takes place and the boom (82) and accordingly the formed body (1) and the stabilizer (81) are raised by slide inclines (93), that thereafter the thrusting bar (83) moves the boom (82) again back into its initial position and a lowering of the boom (82) proceeds in two steps by means of lowering cams (87 and 88) at a resistor (89), whereby a counter weight prevents an uncontrolled sliding off of the boom (82) along the slide inclines, that a formed body (1) present on the stabilizer (81) of the boom (82) is conveyed by the thrusting bar (83) of the conveyor apparatus (80) into a storage frame (90) and attaims therein a first position, and in that this formed body (1) is lifted and shifted by one position at each following formed body until all storage positions in the storage frame (90) are occupied.

**Revendications**

1. Procédé pour la fabrication de corps de moulage polygonaux (1) ayant un intérieur cylindrique (9a) et des évidements d'ancrage (7a) dans les parties cornières (3a) de leurs parois, à partir d'un mélange de gravier concassé à grains fins et de ciment et qui est comprimé à humidité de terre par pressage et vibrage, caractérisé en ce que le mélange à humidité de terre est mis dans un silo (73) d'une installation d'alimentation (60), cette installation d'alimentation (60) comprenant un tiroir (61) avec un fond coulissant mobile (62), ce tiroir (61) comprenant une pièce d'insertion de réduction (70) qui réparti le remplissage de forme du mélange de façon réglante et à ce qu'il soit prêt pour le pressage et vibrage, caractérisé en outre en ce que le tiroir (61) avec le mélange y contenu est glissé au-dessus de l'espace de moulage (11) d'une forme de corps de moulage (10), que le fond coulissant (62) est ensuite déclenché et recatapulté soudainement par des poids de traction (63) jusqu'à contacter un arrêt de fond coulissant (72) de l'installation d'alimentation (60), de façon que le mélange tombe comme masse compacte dans l'espace de moulage (11), dans ladite espace de moulage (11) se trouvant un noyau (9) et des fers d'évidement (7) qui servent à façonner l'intérieur cylindrique (9 a) et les évidements d'ancrage (7 a) dans les parties cornières (3 a) du corps de moulage (1), que le mélange contenu dans l'espace de moulage (11) est comprimé moyennant un dispositif de pressage et vibrage (20) et que le démoulage du corps de moulage (1) s'effectue en soulevant la forme de corps de moulage (10) moyennant une pile élévateur (40) et que celui est éloigné au moyen d'une installation de transport (80).

2. Procédé selon la revendication 1, caractérisé en ce que le tiroir (61) est glissé dans sa position de départ en dessous du silo (73) pour être rempli de nouveau, le fond coulissant (62) restant ancré à des supports de blocage (69) par des étriers de blocage (68) jusqu'à ce qu'une barre de blocage (64) enclenche dans des taquets de blocage (65) et que des taquets de déclenchement (67) poussent contre des dispositifs de déclenchement (66) en levant ainsi la barre de blocage (64) pour déclencher le fond coulissant (62) afin de le libérer pour être recatapulté par les poids de traction (63).

3. Procédé selon les revendications 1 et 2, caractérisé en ce qu'en recatapultant, les poids de traction (63) glissent chacun dans un tuyau d'amortissement (63 b) de manière à ce que leur charge de traction est en plein effet pendant leur phase de démarrage et que la charge de traction est diminuée ensuite par l'augmentation de la compression d'air dans les tuyaux d'amortissement (63 b).

4. Procédé selon la revendication 1, caractérisé en ce qu'une tôle support (21) avec des perforations correspondantes aux fers d'évidement (7) dans l'espace de moulage (11) est posée sur le mélange contenu dans l'espace de moulage, que le dispositif de pressage et vibrage (20) est ensuite abaissé sur la tôle support (21) en déchargeant les cylindres hydrauliques (59) qui déplacent le dispositif de pressage et vibrage (20), que des butées de mesure (22) prévues dans la forme de corps de moulage (10) garantissent l'observation de la hauteur du corps de moulage (1), que le noyau (9) est lié à une partie de l'enveloppe de la forme (2-8) par une balance à levier (30), afin de garantir une compression régulière du corps de moulage (1), que le noyau (9) comporte un excentrique (19) situé dans une ouverture de fixation (16) de l'enveloppe de la forme (2), et que le noyau (9) est fixé dans l'ouverture de fixation (16) au moyen de l'excentrique (19) à la fin d'une phase de pressage-vibrage.

5. Procédé selon la revendication 1, caractérisé en ce qu'après terminaison du pressage-vibrage, la forme de corps de moulage (10) est soulevée jusqu'à une hauteur pivotante et pivotée de 180° ensemble avec le corps de moulage (1), qu'un stabilisateur (81) est avancé sur un bras (82) et pressé contre la tôle support (21) au moyen d'une barre de poussée (83) de l'installation de transport (80) servant à éloigner le corps de moulage (1), que le dispositif de pressage et vibrage (20) est simultanément abaissé sur l'un de deux anneaux de couronne (5) coulissant longitudinalement sur la forme de corps de moulage (19), en déplaçant des taquets de suspension (12) de la forme de corps de moulage (10) en appui sur des supports de forme (42), que des mâchoires de blocage (43) sont transférées de taquets de blocage (44) sur des taquets de support (45), que des piles élévateur (40) avec des régulateurs d'anneaux de couronne (46) et une selle de support (41) sont soulevées, que les régulateurs d'anneaux de couronne (46) pressent des cylindres de blocage (53) dans des encoches de blocage (54), qui bloquent des supports de blocage (52) et des branches de blocage (51) et tiennent en bas la paire d'anneaux de couronne (5) avec le corps de moulage (1), que les selles de support (41) saisissent des axes de support de forme (8), soulèvent la forme de corps de moulage (10) pour démouler le corps de moulage (1), qu'en même temps, le noyau (9) est libéré de son ouverture de fixation (16) par une rotation limitée, cette rotation empêchant en plus une adhésion du corps de moulage (1) au fond du noyaux (9), que les régulateurs d'anneaux de couronne (46) sont poussés en haut contre des ressorts de pression (47) autant que nécessaire pour le démoulage et les cylindres de blocage (53) glissent hors des encoches de blocage (54) de manière à ce que la paire d'anneaux de couronne (5) et la forme de corps de moulage (10) s'enlèvent ensemble du corps de moulage (1).

6. Procédé selon la revendication 1, caractérisé en ce qu'une paire d'anneaux de couronne (5) est déplacée dans la forme de corps de moulage (10) lors du démoulage du corps de moulage (1), et que par le déplacement de la paire d'anneaux de couronne (5) dans la forme de corps de moulage (10), l'espace de moulage (11) dans la forme de corps de moulage (10) est créée réciproquement, de façon que la forme de corps de moulage (10) est utilisée des deux côtés afin de faciliter est accélérer le processus de travail.

7. Procédé selon la revendication 5, caractérisé en ce que les barres de poussée (83) avancent le bras (82) jusqu'à ce que le stabilisateur (81) soit centré en dessous du corps de moulage (1), que des galets de guidage (85), prévus au bras (82), entrent en contact avec une résistance (86) en terminant ainsi l'avancement du bras (82), que le déplacement ultérieur de la barre de poussée (83) mène à un déplacement entre celle-là et le bras (82) ainsi que le corps de moulage (1) et le stabilisateur (81) sont soulevés par des rampes de glissement (93), que le bras (82) est ensuite repoussé dans sa position de départ par la barre de poussée (83) et le bras (82) est abaissé en deux opérations au moyen de taquets d'abaissement (87 et 88) et une résistance (89), un glissement non-contrôlé du bras (82) le long des rampes de glissement (93) étant empêché par une contrecharge, qu'un corps de moulage (1) se trouvant sur le stabilisateur (81) du bras (82), est transféré par la barre de poussée (83) de l'installation de transport (80) dans une étagère de stockage (90) et y occupe une première position, et que ce corps de moulage (1) et soulevé et avancé d'une position avec chaque corps de moulage (1) suivant, jusqu'à ce que toutes les positions de stockages de l'étagère de stockage soient occupées.

Fig.1

21

Fig. 2

Fig. 3

Fig. 5

Fig. 5 b

Fig. 4

Fig. 4 b

Fig.6b   Fig.6   Fig.7   Fig.8

Fig. 9b    Fig. 9    Fig. 10b    Fig. 10

0 126 730

Fig.12

Fig.12b

Fig.11

Fig.11b

0 126 730

Fig.15

Fig.16

Fig.17

90

Fig.18

1

50

22

50

22

10

10

21

82

83  80  84

0126730

Fig.19

Fig.19 b

Fig.20

Fig.20 b

Fig.22 b

90

90

91

92

84

80

80

84

Fig.22

90

91

81

82

92

87

85

88

89

86

80

84

83

Fig.21

0 126 730

Fig. 23          Fig. 24          Fig. 25

Fig. 29

75

79

70

Fig. 27

70

Fig. 28

77

Fig. 26

Fig. 30 · Fig. 31 · Fig. 32 · Fig. 33 · Fig. 34 · Fig. 35 · Fig. 36

Fig.40

73

74

77

Fig.41

78

70

71

64

61

62

65

72

68

Fig.37

Fig.38

73

75

76

74

79

Fig.39

75

73

74

79

Fig.43

66

69

Fig.44

63b

Fig.45

63

Fig.46

Fig. 49

Fig. 48

Fig. 47

Fig. 42

Fig. 50